# EUROPEAN PATENT APPLICATION

(11) **EP 4 733 660 A1**
(43) Date of publication of application: **29.04.2026**
(21) Application number: 25183672.2
(22) Date of filing: 18.06.2025
(51) Int. Cl.: F21L 4/00, F21V 3/02, F21V 15/01, F21V 21/096, F21V 27/02, F21V 31/00, F21S 9/03, F21W 131/10, F21Y 103/10, F21Y 115/10

(54) **PORTABLE OUTDOOR LED ILLUMINATING LAMP**

(30) Priority: 28.10.2024 CN 202411512659
(71) Applicant: Shenzhen Supersun Limited, Shenzhen, Guangdong 518110 (CN)
(72) Inventor: ZHANG, Wenfeng, Shenzhen, 518110 (CN); WANG, Lizhen, Shenzhen, 518110 (CN)
(74) Representative: KASTEL Patentanwälte PartG mbB

(57) **Abstract**

The present disclosure relates to the field of an outdoor LED illuminating lamp, and discloses a portable outdoor LED illuminating lamp which includes an inflation cavity body defining a cavity, a lamp strip mounting unit, an adsorption unit, an air nozzle and a connector. After air is injected into the cavity, the illuminating lamp expands and stretches to obtain a larger illuminating lamp body shape, and the lamp is restored to be flat after the air is exhausted to facilitate being curled and folded for storage. As the cavity is a closed cavity, the lamp is not only waterproof, but also enables the inflation cavity body to float on a water surface after inflation, so that the lamp is not afraid of wading activities at all; meanwhile, a flexible material matched with different inflation amounts is more convenient for close-fitting wearing and plays a role of safety escort and warning in outdoor activities. An expansion device, such as a solar photovoltaic panel, a pluggable connected charging and data interface, a storage battery, a control device, a portable loudspeaker can also be installed in a second accommodating cavity.

## Description

### TECHNICAL FIELD

The present disclosure relates to an outdoor LED illuminating lamp, in particular to a portable outdoor LED illuminating lamp.

### BACKGROUND

An outdoor LED illuminating lamp is an illuminating fixture specifically designed for outdoor application and made of a fourth-generation green light source LED.

As for existing outdoor travel LED lamps, a big-volume lamp is bulky and inconvenient to carry, while a light emitting surface of a small-volume product such as a flashlight is too small and a light source is relatively concentrated, resulting in serious glare due to insufficient floodlighting degree, which is not suitable for use in some scenes, such as camping, tents, picnics, expeditions and other scenarios. Moreover, it is inevitable to wade in outdoor activities. However, a traditional waterproof product cannot be inflated to increase a volume thereof and float on a water surface, resulting in a problem of loss during use, while a product that cannot be waterproof may be damaged when wading. In order to overcome the defects of the existing technologies, the present disclosure provides an LED illuminating lamp.

### SUMMARY

A main purpose of the present disclosure is to provide a portable outdoor LED illuminating lamp, aiming at solving at least one of technical problems that an outdoor LED illuminating lamp in the existing technology is bulky and inconvenient to carry, and a waterproof product of the outdoor LED illuminating lamp cannot be inflated to enlarge a volume thereof to float on a water surface, so that the product is lost in use, while a product which cannot be waterproof is damaged when wading.

To achieve the above object, a first aspect of the present disclosure provides a portable outdoor LED illuminating lamp, including:
an inflation cavity body, where a joint of an outer peripheral wall of the inflation cavity body is provided with a first butting opening, the inflation cavity body is butted and fused through the first butting opening to form a tubular shape, the inflation cavity body is provided with a second butting opening at both ends, and the inflation cavity body is butted and fused through both of the second butting opening to define an inflation cavity;
a lamp strip mounting unit, including a lamp strip protective cover and a lamp strip, where the lamp strip protective cover is welded on an inner side wall of the inflation cavity body, the lamp strip protective cover and the inflation cavity body form a first accommodating cavity, and the lamp strip is mounted in the first accommodating cavity;
an adsorption unit, including a decorative cover welded on an outer side wall of the inflation cavity body, where a second accommodating cavity is formed between the inflation cavity body and the decorative cover;
an air nozzle penetrating through the adsorption unit and mounted on the outer side wall of the inflation cavity body; and
a connector, including a controller and an input wire, where an end of the input wire is connected with the controller, and the other end of the input wire is inserted into the second accommodating cavity, penetrates a side wall portion of the inflation cavity body corresponding to the first accommodating cavity, extends into the first accommodating cavity, and is electrically connected with the lamp strip.

Further, the inflation cavity body, the lamp strip protective cover and the decorative cover are all made of a flexible material; and
the lamp strip includes a flexible printed circuit board and a lamp bead as well as an electronic element arranged on the flexible printed circuit board.

Further, the outer peripheral wall of the inflation cavity body is provided with a mounting opening, the air nozzle is welded at the mounting opening, and a mounting base of the air nozzle is welded with the decorative cover outside.

Further, a first sealing cover is inserted into an inner wall of the mounting base.

Further, a sealing gasket is arranged directly below the first sealing cover, the sealing gasket is located inside the mounting base, and the sealing gasket is attached to a bottom of the mounting base.

Further, the decorative cover is provided with a plurality of magnet marking positions, each of the magnet marking positions is provided with a respective magnet wrapping covers, where each magnet wrapping cover is welded with its respective magnet marking position of the decorative cover to form a respective closed cavity, and a magnet is arranged in the respective closed cavity.

Further, the decorative cover is provided with a mounting hole, and the mounting hole is correspondingly welded with an expansion module.

Further, the expansion module includes one or more of a solar photovoltaic panel, a pluggable connected charging and data interface, a storage battery, a connection unit and a portable loudspeaker.

Further, the decorative cover is provided with a decorative band.

Beneficial effects: after air is injected into the inflation cavity, the illuminating lamp can expand to obtain a larger illuminating lamp body shape, and the lamp can be restored to be flat after the air is exhausted to facilitate being curled and folded for storage. As the inflation cavity is a closed cavity, the lamp is not only waterproof, but also enables the inflation cavity body to float on a water surface after inflation, so that the lamp is not afraid of wading activities at all. The manufactured lamp may also be used as a swimming ring for illuminating after reaching a certain inflated size, which is convenient for people who swim at night to illuminate around a water area. At the same time, the flexible material matched with different inflation amounts is more convenient for close-fitting wearing and plays a role of safety escort and warning in outdoor activities.

The lamp strip protective cover and the inflation cavity body form the first accommodating cavity, and the lamp strip is mounted in the first accommodating cavity; the first accommodating cavity can limit a moving range of the lamp strip, and is isolated from the inflation cavity through the lamp strip protective cover, thus improving a waterproof effect; the lamp strip and the lamp strip protective cover are fused and packaged in the inflation cavity together to form a basic luminous body of the illuminating lamp, and illuminating is carried out through the lamp strip; the light emitted by the light source of the lamp strip is diffused through the inflation cavity body for the second time, and under an action of the inflation cavity body, the larger illuminating lamp body shape is obtained, so that the light on the whole light-emitting surface can be more evenly distributed, the glare is lower, and the light is softer and less dazzling; and in case of a special illuminating requirement, glue can also be dropped on the lamp strip for flexible lens light distribution.

### BRIEF DESCRIPTION OF THE DRAWINGS

FIG. 1 is an external view of an LED illuminating lamp according to the present disclosure;
FIG. 2 is a horizontal section of the LED illuminating lamp according to the present disclosure;
FIG. 3 is an exploded view of the horizontal section of the LED illuminating lamp according to the present disclosure;
FIG. 4 is a sectional view of an air nozzle according to the present disclosure;
FIG. 5 is an exploded view I of the LED illuminating lamp according to the present disclosure;
FIG. 6 is an exploded view II of the LED illuminating lamp according to the present disclosure;
FIG. 7 is a function expansion example of the LED illuminating lamp according to the present disclosure;
FIG. 8 shows rolling and shaping of an inflation cavity body of the LED illuminating lamp according to the present disclosure;
FIG. 9 is a schematic structural diagram of a control panel module according to the present disclosure; and
FIG. 10 is a folding example of the LED illuminating lamp according to the present disclosure after deflation;
in which:
1 - inflation cavity body; 101 - first butting opening; 102 - second butting opening; 103 - mounting opening; 2 - lamp strip mounting unit; 201 - lamp strip protective cover; 202 - lamp strip; 3 - adsorption unit; 301 - decorative cover; 302 - magnet; 303 - magnet wrapping cover; 304 - magnet marking position; 305 - mounting hole; 4 - air nozzle; 401 - mounting base; 402 - first sealing cover; 403 - sealing gasket; 5 - connector; 6 - decorative band; 7 - connection unit; 701- control panel module; 702 - second sealing cover; and 703 - connection interface.

The realization, functional features and advantages of the present disclosure will be further described with reference to the attached drawings in combination with the embodiments.

### DETAILED DESCRIPTION

It should be understood that the specific embodiments described herein are only used to explain the present disclosure, but are not intended to limit the present disclosure.

In the description of the present disclosure, it should be noted that, the orientation or positional relationship indicated by the terms "center", "longitudinal", " transversal", "length", "width", "thickness", "up", "down", "front", "back", "left", "right", "vertical", "horizontal", "top", "bottom", "inside", "outside", "clockwise", "anticlockwise" and the like is based on the orientation or positional relationship shown in the drawings, only for the convenience of describing the present disclosure and simplifying the description, and does not indicate or imply that the indicated device or element must have a specific orientation, or be constructed and operated in a specific orientation. Therefore, the terms should not be construed as limiting the present disclosure. Moreover, the terms "first" and "second" are only used for descriptive purposes, but cannot be understood as indicating or implying relative importance, or implicitly indicating the number of indicated technical features. Therefore, the features defined with "first" or "second" can explicitly or implicitly include one or more of the features. In the description of the present disclosure, the meaning of "a plurality of" is two or more than two unless otherwise specifically defined.

In the description of the present disclosure, it should be noted that terms such as "installation", "connected" and "connection", etc., should be understood broadly, for example, the connection may be fixed connection, or detachable connection or integral connection; it may be mechanical connection or direct connection, may also be indirect connection through an intermediate medium, and may also be internal communication and indirect communication of two elements or interaction relationship of two elements. The specific meaning of the above terms in the present disclosure can be understood in a specific case by those of ordinary skills in the art.

In the present disclosure, unless expressly stipulated and defined otherwise, the first feature "over" or "under" the second feature may include that the first and second features are in direct contact, and may also include that the first and second features are not directly contacted, but contacted through other intermediate features. Moreover, the first feature "on", "over" or "above" the second feature includes that the first feature is directly above and diagonally above the second feature, or it simply means that a level of the first feature is higher than that of the second feature. The first feature "below", "under" and "beneath" the second feature includes that the first feature is directly below and diagonally below the second feature, or it simply means that the level of the first feature is less than that of the second feature.

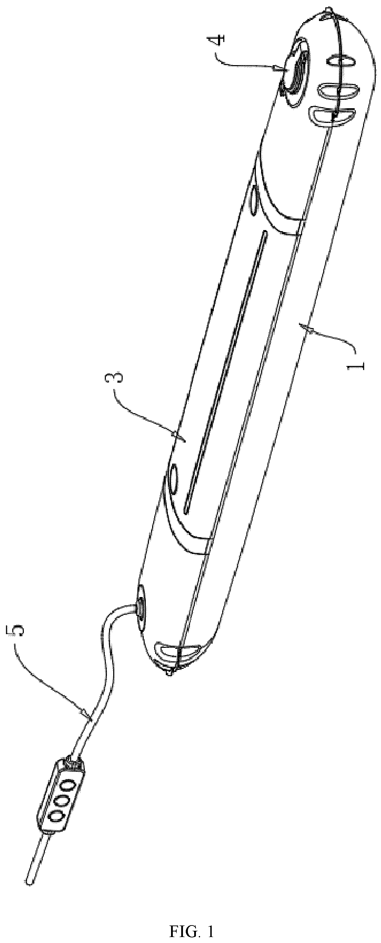

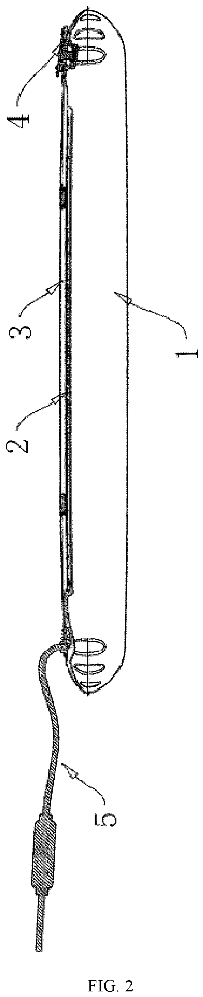

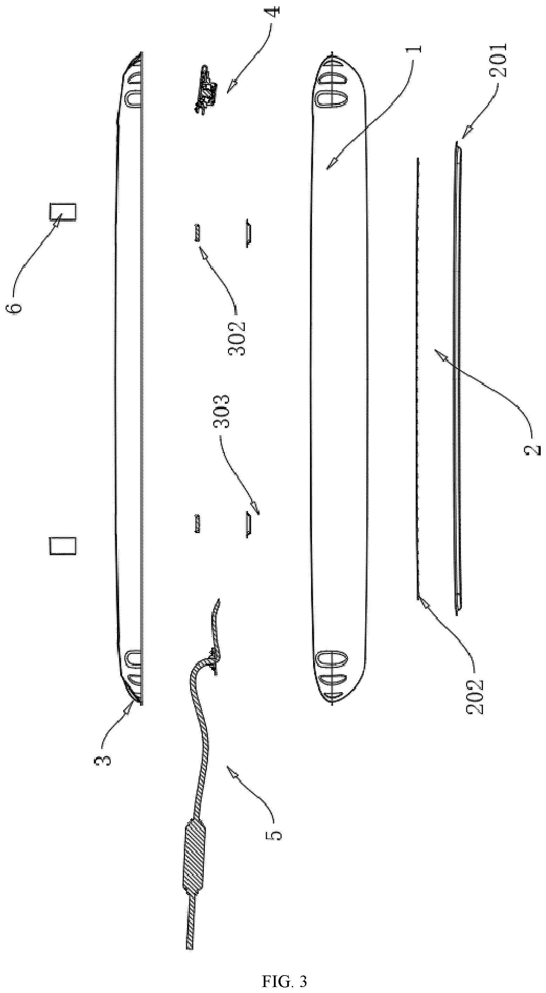

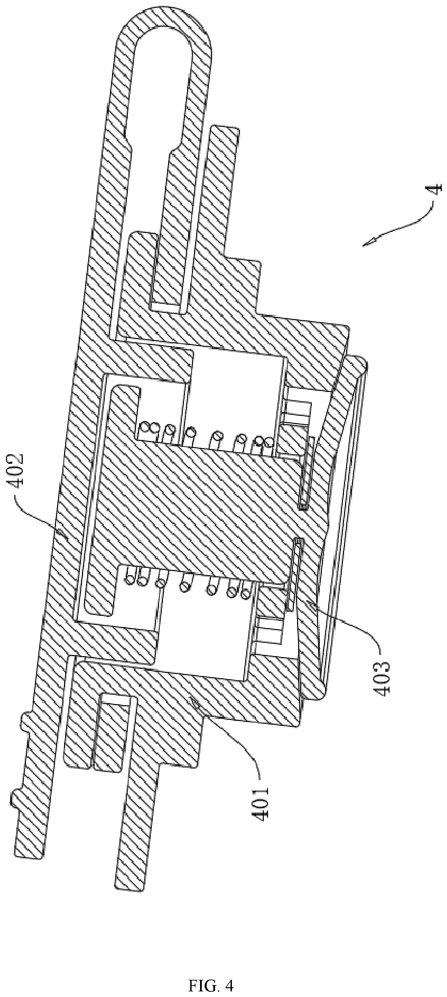

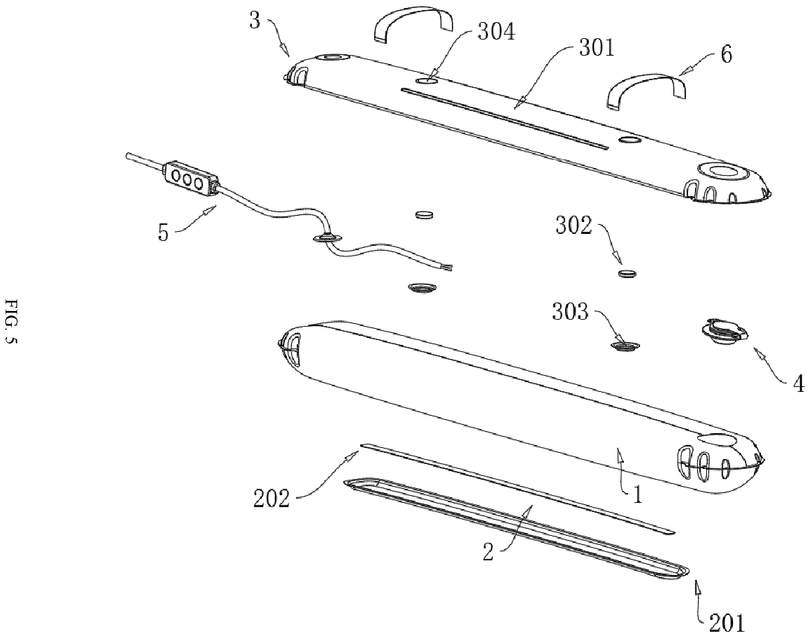

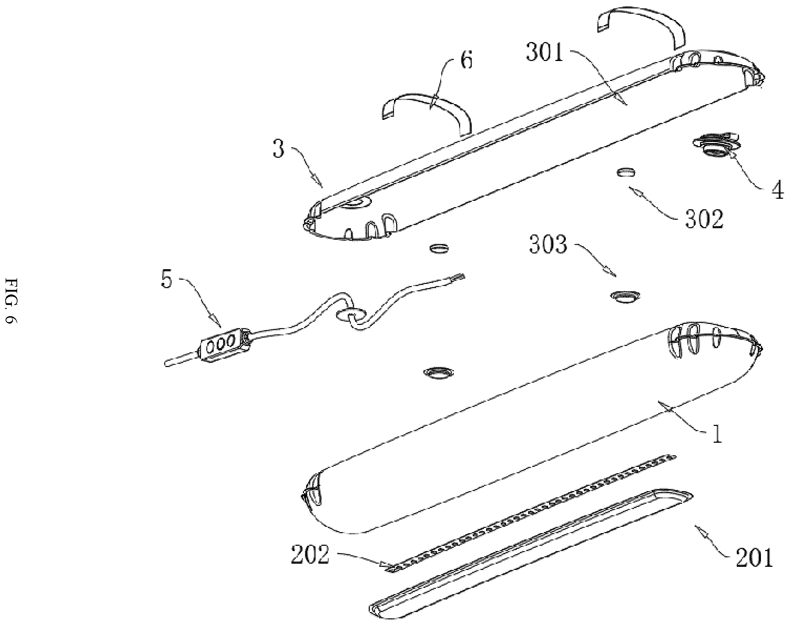

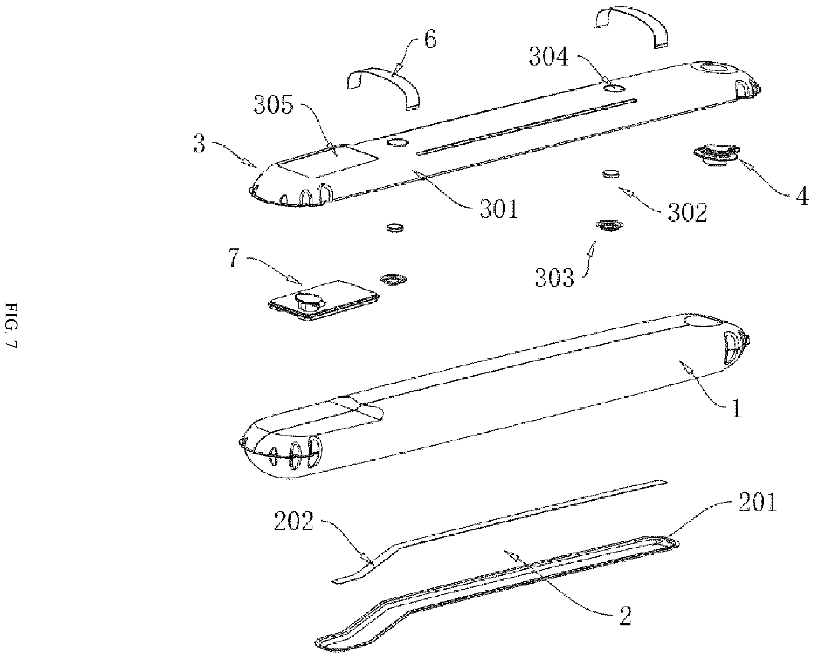

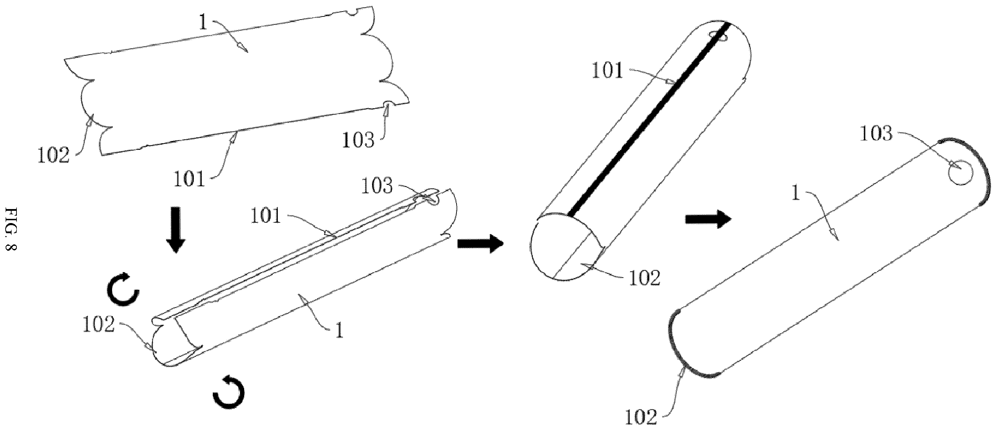

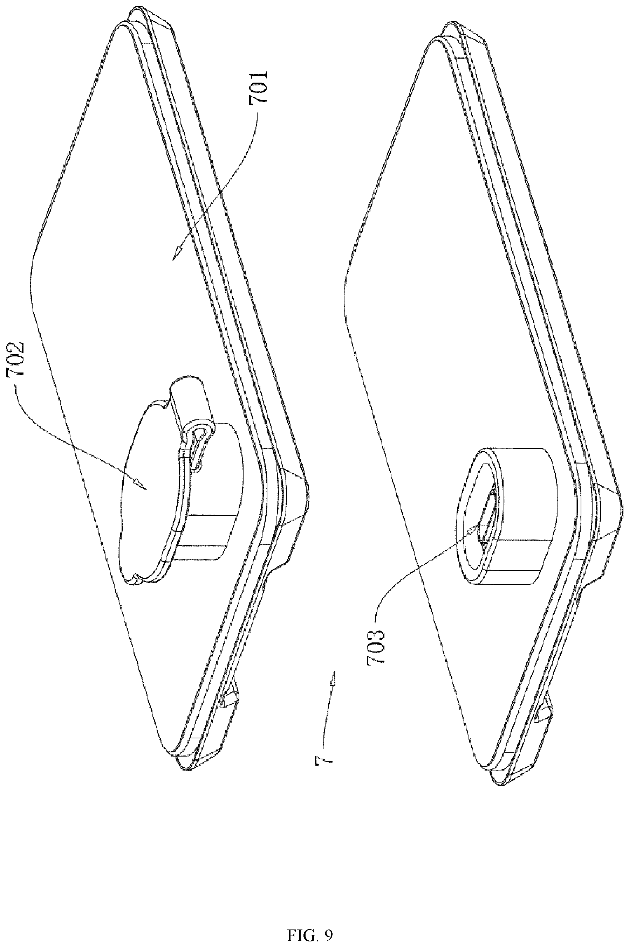

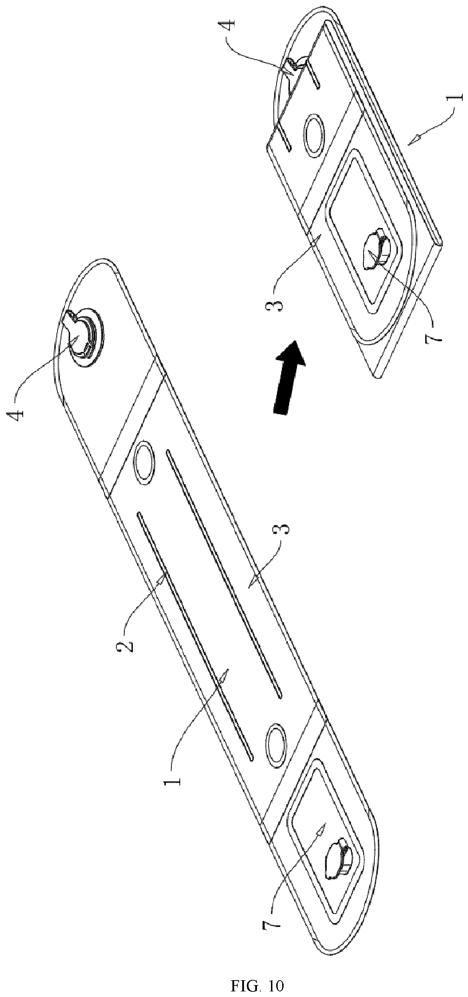

As shown in FIGs. 1 to 10, the embodiments of the present disclosure provide a portable outdoor LED illuminating lamp, including:
an inflation cavity body 1, where components forming the inflation cavity body 1 are all made of flexible materials, and edges of the flexible materials are closed to form a closed cavity.

After air is injected into an inflation cavity defined by the inflation cavity body 1, the illuminating lamp can expand to obtain a larger illuminating lamp body shape, and the lamp can be restored to be flat after the air is exhausted to facilitate being curled and folded for storage. As the inflation cavity defined by the inflation cavity body 1 is a closed cavity, the lamp is not only waterproof, but also enables the inflation cavity body 1 to float on a water surface after inflation, so that the lamp is not afraid of wading activities at all. The manufactured lamp may also be used as a swimming ring for illuminating after reaching a certain inflated size, which is convenient for people who swim at night to illuminate around a water area. At the same time, the flexible material matched with different inflation amounts is more convenient for close-fitting wearing and plays a role of safety escort and warning in outdoor activities.

The lamp includes a lamp strip mounting unit 2, including a lamp strip protective cover 201 and a lamp strip 202, where the lamp strip protective cover 201 is welded on an inner side wall of the inflation cavity body 1, the lamp strip protective cover 201 and the inflation cavity body 1 form a first accommodating cavity, and the lamp strip 202 is mounted in the first accommodating cavity.

The first accommodating cavity can limit a moving range of the lamp strip 202, and is isolated from the inflation cavity body 1 through the lamp strip protective cover 201, thus improving a waterproof effect.

Meanwhile, the lamp strip protective cover 201 can also provide an illuminating emulsification effect (optical diffusion) for the LED light source, so that the light can be diffused more evenly.

The lamp strip 202 and the lamp strip protective cover 201 are fused and packaged in the inflation cavity body 1 together to form a basic luminous body of the illuminating lamp, and illuminating is carried out through the lamp strip 202; the light emited by the light source of the lamp strip 202 is diffused through the inflation cavity body 1 for the second time, and under an action of the inflation cavity body 1, the larger illuminating lamp body shape is obtained, so that the light on the whole light-emitting surface can be more evenly distributed, the glare is lower, and the light is softer and less dazzling.

In case of a special illuminating requirement, glue can also be dropped on the lamp strip 202 for flexible lens light distribution.

The lamp includes an adsorption unit 3, including a decorative cover 301 welded on an outer side wall of the inflation cavity body 1, where a second accommodating cavity is formed between the inflation cavity body 1 and the decorative cover 301; the inflation cavity body 1 is protected by the decorative cover 301, which enhances a wear resistance of a mounting surface, and avoids damage caused by puncture of the inflation cavity body 1 by an external object during mounting to disable the inflation cavity body 1 to be used normally, and functions of shaping the inflation cavity body 1 and partially shielding the inflation cavity body 1 are realized. At the same time, a formed second accommodating cavity can carry required electrical elements and the like.

The lamp includes an air nozzle 4 penetrating through the adsorption unit 3 and mounted on a side wall of the inflation cavity body 1, and air can be injected into and discharged out of the inflation cavity through the air nozzle 4.

When the inflation cavity body 1 needs to be curled and folded for storage, a sealing gasket 403 is allowed to be separated from a mounting base 401 and then the air in the inflation cavity can be exhausted by pressing, which is convenient for the inflation cavity body 1 to be curled and folded for storage.

The lamp includes a connector 5, including a controller and an input wire, where an end of the input wire is connected with the controller, and the other end of the input wire is inserted into the second accommodating cavity. The input wire penetrates a side wall portion of the inflation cavity body 1 corresponding to the first accommodating cavity, extends into the first accommodating cavity, and is electrically connected with the lamp strip 202.

The inflation cavity body 1, the lamp strip protective cover 201, the decorative cover 301 as well as a magnet wrapping cover 303 and a decorative band 6 mentioned below are all made of a flexible material, which may be light-transmitting or light-opaque, and may be in any color to construct the basic appearance. The lamp strip 202 includes a flexible printed circuit board and a lamp bead arranged on the flexible printed circuit board. Therefore, when the portable outdoor LED illuminating lamp needs to be stored, the air in the Inflation cavity body 1 is exhausted by pressing, so that it is convenient for the inflation cavity body 1 to be curled and folded for storage. Further, the flexible printed circuit board may generally be equipped with related electronic elements, which are not limited unnecessarily here.

The inflation cavity body 1 is provided with a first butting opening 101 at a joint of an outer peripheral wall thereof, the inflation cavity body 1 is butted and fused through the first butting opening 101 to form a tubular shape. The inflation cavity body 1 is provided with a second butting opening 102 at both ends, and the inflation cavity body 1 is butted and fused through the second butting opening 102 to define an inflation cavity. The inflation cavity body 1 is made of a piece of flexible material which is cut in shape, bent and folded in half, and formed into a tubular shape through fusion and bonding processes. First, the inflation cavity body 1 is curled and bent, the first butting opening 101 is butted and fused, and then the second butting openings 102 at the two ends are butted and fused to form a closed inflation accommodating cavity.

The outer peripheral wall of the inflation cavity body 1 is provided with a mounting opening 103, and a mounting base 401 is fused at the mounting opening 103. The mounting base 401 penetrates through the decorative cover 301 and is located outside, and the air nozzle 4 is assembled through the mounting opening 103 to achieve the purpose of inflation and deflation.

A first sealing cover 402 is inserted into an inner wall of the mounting base 401.

A sealing gasket 403 is arranged directly below the first sealing cover 402, the sealing gasket 403 is located inside the mounting base 401, and the sealing gasket 403 is attached to a bottom of the mounting base 401. By opening the first sealing cover 402, the air is delivered to the mounting seat 401, and under an action of air pressure, the air pushes the sealing gasket 403 to move, so that the air is injected into the cavity of the inflation cavity body 1.

When the injection is completed, the sealing gasket 403 is attached to the mounting seat 401 to seal the mounting seat 401.

When the inflation cavity body 1 needs to be curled and folded for storage, the sealing gasket 403 is allowed to be separated from the mounting base 401. In this case, the air in the inflation cavity can be exhausted by pressing, which is convenient for the inflation cavity body 1 to be curled and folded for storage.

The decorative cover 301 is provided with a plurality of magnet marking positions 304, the magnet marking positions 304 are correspondingly provided with magnet wrapping covers 303, the magnet wrapping covers 303 are welded with the respective magnet marking positions 304 of the decorative cover 301 to form respective closed cavities, and each magnet 302 is arranged in the respective closed cavity. The magnets 302 are configured for the lamp body to adsorb a mounted magnet device, which is convenient for fixing the lamp body in a designated position outdoors.

The decorative cover 301 is provided with a mounting hole 305, the mounting hole 305 is correspondingly welded with an expansion module, and interaction with the outside is realized through the mounting hole 305.

In some embodiments, the expansion module may be one or more of a connection unit 7, a solar photovoltaic panel, a pluggable connected charging and data interface, a storage battery, a control device and a portable loudspeaker.

In an implementation, the photovoltaic panel mounted is fused with one piece of transparent material through the mounting hole 305 to receive external sunlight. There are buttons and indicator light on the control device, and flashing information of the indicator light can be seen through a piece of transparent material, which is fused through the mounting hole 305 . Various information needing to be exchanged through the mounting hole 305 is required to be set according to the functions of the expansion module.

The connection unit 7 includes a control panel module 701 welded between the inflation cavity body 1 and the decorative cover 301. The control panel module 701 is connected with the lamp strip 202 through a lead. A connection interface 703 is welded on an outer wall of the control panel module 701, and a second sealing cover 702 is inserted into an outer peripheral wall of the connection interface 703. The connection interface 703 may be a data interface, and the like.

The decorative cover 301 is provided with a decorative band 6.

Alternatively, a surface of the decorative cover 301 may also be provided with a hook buckle, a swinging ring, a hook, a chain, a hanging rope and a strap wearable device.

According to the portable outdoor LED illuminating lamp according to the embodiments of the present disclosure, after air is injected into the inflation cavity, the illuminating lamp can expand to obtain a larger illuminating lamp body shape, and the lamp can be restored to be flat after the air is exhausted to facilitate being curled and folded for storage. As the cavity defined by the inflation cavity body 1 is a closed cavity, the lamp is not only waterproof, but also enables the inflation cavity body 1 to float on a water surface after inflation, so that the lamp is not afraid of wading activities at all. The manufactured lamp may also be used as a swimming ring for illuminating after reaching a certain inflated size, which is convenient for people who swim at night to illuminate around a water area. At the same time, the flexible material matched with different inflation amounts is more convenient for close-fitting wearing and plays a role of safety escort and warning in outdoor activities.

The foregoing descriptions are some embodiments of the present disclosure, but are not intended to limit the patent scope of the present disclosure. All equivalent structures or equivalent flow transformations made using the description of the present disclosure and the accompanying drawings, or being used directly or indirectly in other related technical fields, are similarly included in the protection scope of the present disclosure.

## Claims

1. A portable outdoor LED illuminating lamp, comprising:
an inflation cavity body (1), wherein a joint of an outer peripheral wall of the inflation cavity body (1) is provided with a first butting opening (101), the inflation cavity body (1) is butted and fused through the first butting opening (101) to form a tubular shape, the inflation cavity body (1) is provided with a second butting opening (102) at both ends, and the inflation cavity body (1) is butted and fused through both of the second butting opening (102) to define an inflation cavity;
a lamp strip mounting unit (2), comprising a lamp strip protective cover (201) and a lamp strip (202), wherein the lamp strip protective cover (201) is welded on an inner side wall of the inflation cavity body (1), the lamp strip protective cover (201) and the inflation cavity body (1) form a first accommodating cavity, and the lamp strip (202) is mounted in the first accommodating cavity;
an adsorption unit (3), comprising a decorative cover (301) welded on an outer side wall of the inflation cavity body (1), wherein a second accommodating cavity is formed between the inflation cavity body (1) and the decorative cover (301);
an air nozzle (4) penetrating through the adsorption unit (3) and mounted on the outer side wall of the inflation cavity body (1); and
a connector (5), comprising a controller and an input wire, wherein an end of the input wire is connected with the controller, and the other end of the input wire is inserted into the second accommodating cavity, the input wire penetrates a side wall portion of the inflation cavity body (1) corresponding to the first accommodating cavity, extends into the first accommodating cavity, and is electrically connected with the lamp strip (202).

2. The portable outdoor LED illuminating lamp according to claim 1, wherein the inflation cavity body (1), the lamp strip protective cover (201) and the decorative cover (301) are all made of a flexible material; and
the lamp strip (202) comprises a flexible printed circuit board and a lamp bead arranged on the flexible printed circuit board.

3. The portable outdoor LED illuminating lamp according to claim 1, wherein the outer peripheral wall of the inflation cavity body (1) is provided with a mounting opening (103), the air nozzle (4) is welded at the mounting opening (103), and a mounting base (401) of the air nozzle (4) is welded with the decorative cover (301) outside.

4. The portable outdoor LED illuminating lamp according to claim 3, wherein a first sealing cover (402) is inserted into an inner wall of the mounting base (401).

5. The portable outdoor LED illuminating lamp according to claim 4, wherein a sealing gasket (403) is arranged directly below the first sealing cover (402), the sealing gasket (403) is located inside the mounting base (401), and the sealing gasket (403) is attached to a bottom of the mounting base (401).

6. The portable outdoor LED illuminating lamp according to claim 5, wherein the decorative cover (301) is provided with a plurality of magnet marking positions (304), and each of the plurality of magnet marking positions (304) is provided with a respective magnet wrapping cover (303), wherein each magnet wrapping cover (303) is welded with its respective magnet marking position (304) of the decorative cover (301) to form a respective closed cavity, and a magnet (302) is arranged in the respective closed cavity.

7. The portable outdoor LED illuminating lamp according to claim 6, wherein the decorative cover (301) is provided with a mounting hole (305), and the mounting hole (305) is correspondingly welded with an expansion module.

8. The portable outdoor LED illuminating lamp according to claim 7, wherein the expansion module comprises one or more of a solar photovoltaic panel, a pluggable connected charging and data interface, a storage battery, a connection unit (7) and a portable loudspeaker.

9. The portable outdoor LED illuminating lamp according to claim 1, wherein the decorative cover (301) is provided with a decorative band (6).
